# EUROPEAN PATENT APPLICATION

(11) **EP 4 769 791 A1**
(43) Date of publication of application: **01.07.2026**
(21) Application number: 24898008.8
(22) Date of filing: 21.11.2024
(51) Int. Cl.: H01M 50/502, H01M 50/583, H01M 50/507, H01M 50/59, H01M 50/588, H01M 50/298, H01M 50/509, H01M 50/521, H02H 7/18

(54) **FUSE-INTEGRATED BUSBAR, BATTERY PACK INCLUDING SAME AND METHOD FOR MANUFACTURING FUSE-INTEGRATED BUSBAR**

(30) Priority: 28.11.2023 KR 20230168410
(71) Applicant: LG Energy Solution, Ltd., Seoul 07335 (KR)
(72) Inventor: LEE, Youngjun, Daejeon 34122 (KR); LEE, Wontae, Daejeon 34122 (KR); HWANG, Sungtack, Daejeon 34122 (KR)
(74) Representative: Plasseraud IP
(86) International application number: PCT/KR2024/018475
(87) International publication number: WO 2025/116412

(57) **Abstract**

The present invention provides a fuse-integrated busbar, including: a first busbar 32 including a plurality of busbar layers 300 stacked therein, each of the plurality of busbar layers 300 including: an element 310 provided with a melting portion M melting and disconnecting when an overcurrent flows therethrough; and a first busbar unit 320 and a second busbar unit 330 integrated with the element 310 and extending from two lengthwise ends of the element 310, respectively; and an extinguishing member 34 surrounding a plurality of the elements 310 of the plurality of busbar layers 300 to extinguish an arc.

## Description

### [TECHNICAL FIELD]

This application claims the benefit of priority based on Korean Patent Application No. 10-2023-0168410 filed on November 28, 2023, entire content disclosed in the document of the patent applications is included as a part of this specification.

The present invention relates to a fuse-integrated busbar, a battery pack including the same, and a method of manufacturing a fuse-integrated busbar having a simple configuration, small size and lightweight with improved energy efficiency, quality, quality uniformity and durability, which may be easily manufactured at low cost, installed and maintained, capable of blocking overcurrent and short circuits at the battery module level and which has improved durability, may be miniaturized and lightened.

### [BACKGROUND ART]

Secondary batteries are commonly used in portable devices as well as electric vehicles (EV) or hybrid vehicles (HEV) driven by electric driving sources.

The types of secondary batteries include lithium ion batteries, lithium polymer batteries, nickel cadmium batteries, nickel hydrogen batteries and nickel zinc batteries. The operating voltage of these unit secondary batteries, i.e. unit battery cells is approximately 2.5V to 4.2V.

When a higher output voltage is required, such as in a vehicle, a battery pack is constituted by connecting multiple battery cells in series. In addition, a battery pack is constituted by connecting multiple battery cells in parallel according to the charge and discharge capacity required for the battery pack.

When a battery pack is constituted by connecting multiple battery cells in series/parallel, a battery pack may be constituted by connecting multiple battery modules after constituting a plurality of battery modules first.

In order to prevent accidents such as explosion of battery cells in advance, a fuse blocking the current of the battery module when overcurrent flows therethrough may be installed in each battery module. That is, a fuse may be installed to block a short circuit at the battery module level.

However, when a fuse is installed to block a short circuit at the battery module level, the number of fuses increases, which causes problems such as increased manufacturing cost of the battery pack, increased energy loss and weight due to the fuse, and wasted space. As a result, the short circuit is blocked at the battery pack level rather than at the battery module level such that safety was degraded due to not being able to respond to the short circuit quickly and accurately.

Therefore, a method for solving the above-mentioned problems while blocking a short circuit at the battery module level is required.

Prior art pertinent to the present invention is Korean Patent No. 10-2379227.

### [DISCLOSURE]

### [TECHNICAL PROBLEM]

In order to solve above-described problems, it is an object of the present invention to provide a fuse-integrated busbar and a battery pack including the same capable of reducing the number and types of parts and manufacturing costs.

It is an object of the present invention to provide a fuse-integrated busbar and a battery pack including the same having improved energy efficiency, quality and quality uniformity.

It is an object of the present invention to provide a fuse-integrated busbar and a battery pack including the same with improved durability as a fuse.

It is an object of the present invention to provide a fuse-integrated busbar and a battery pack including the same with easy installation and maintenance.

It is an object of the present invention to provide a fuse-integrated busbar and a battery pack including the same capable of reliably blocking overcurrent.

It is an object of the present invention to provide a fuse-integrated busbar and a battery pack including the same having improved extinguishing performance with a simple configuration and at low cost.

It is an object of the present invention to provide a fuse-integrated busbar and a battery pack including the same with a simple configuration capable of facilitating low manufacturing cost and preventing of the spread of arc, flame or heat and damage caused by the spread of arc, flame or heat.

It is an object of the present invention to provide a fuse-integrated busbar and a battery pack including the same capable of preventing short circuit, fire, safety accidents, etc. caused by external contact.

It is an object of the present invention to provide a fuse-integrated busbar and a battery pack including the same having small size and lightweight.

It is an object of the present invention to provide a fuse-integrated busbar and a battery pack including the same with a simple configuration capable of facilitating the manufacturing of an extinguishing member at low cost.

It is an object of the present invention to provide a fuse-integrated busbar and a battery pack including the same with improved energy efficiency, quality and durability.

It is an object of the present invention to provide a fuse-integrated busbar and a battery pack including the same capable of easily blocking a short circuit at the battery module level with a simple configuration and at low cost.

It is an object of the present invention to provide a method of manufacturing a fuse-integrated busbar with a simple configuration capable of facilitating low manufacturing cost and having improved extinguishing performance.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, the present invention provides a fuse-integrated busbar including a first busbar 32 and an extinguishing member 34.

The first busbar 32 may include a plurality of busbar layers 300 stacked therein.

Each of the plurality of busbar layers 300 may include an element 310, a first busbar unit 320 and a second busbar unit 330.

The element 310 may include a melting portion M that is melted and disconnected when overcurrent flows therethrough.

The first busbar unit 320 and the second busbar unit 330 may be integrated with the element 310.

The first busbar unit 320 and the second busbar unit 330 may extend in both directions from two lengthwise ends of the element 310, respectively.

The extinguishing member 34 may surround a plurality of the elements 310 of the plurality of busbar layers 300.

The extinguishing member 34 may extinguish an arc.

In one embodiment, the fuse-integrated busbar may further include a cover 36.

The cover 36 may surround the plurality of elements 310 and the extinguishing member 34.

In one embodiment, each element 310 may include a hole H.

The element 310 may be perforated by the hole H in the stacking direction.

The hole H may define the melting portion M.

The hole H of each element 310 may be in communication in the stacking direction with the hole H of a neighboring element 310 in the stacking direction.

The cover 36 may include an insert part T.

The insert part T may be inserted into a plurality of holes H of the plurality of elements 310.

The extinguishing member 34 may be interposed between inner surfaces of the plurality of the holes H and the outer surface of the insert part T.

In one embodiment, the first busbar unit 320, the second busbar unit 330 and the element 310 of each of the plurality of busbar layers 300 may be in contact with the first busbar unit 320, the second busbar unit 330 and the element 310 of a neighboring busbar layer 300 in the stacking direction, respectively.

The plurality of melting portions M of the plurality of elements 310 may at least partially overlap with each other in lengthwise direction and in widthwise direction.

In one embodiment, the melting portion M of each of the plurality of elements 310 may be in contact with the melting portion M of a neighboring element 310 in the stacking direction.

In one embodiment, the melting portion M of each element 310 may include a first sub-melting portion MS1 and a second sub-melting portion MS2.

The first sub-melting portion MS1 and the second sub-melting portion MS2 may be spaced apart from each other in the widthwise direction with the hole H interposed therebetween.

The first sub-melting portion MS1 and the second sub-melting portion MS2 may be connected in parallel with each other.

In one embodiment, the first busbar unit 320, the second busbar unit 330 and the element 310 of each of the plurality of busbar layers 300 may be in contact with the first busbar unit 320, the second busbar unit 330 and the element 310 of a neighboring busbar layer 300 in the stacking direction, respectively.

A plurality of the first sub-melting portions MS1 of the plurality of elements 310 may at least partially overlap with each other in lengthwise direction and in widthwise direction.

The plurality of the second sub-melting portions MS2 of the plurality of elements 310 may at least partially overlap with each other in lengthwise direction and in widthwise direction.

In one embodiment, a width or a thickness of the melting portion M may be less than a width or a thickness of portions adjacent to two lengthwise ends of the melting portion M, the portions located outside of the melting portion M.

Each element 310 may include a plurality of the melting portions M.

The plurality of melting portions M may be spaced apart from each other in lengthwise direction.

The plurality of melting portions M may be connected in series with each other.

In one embodiment, the extinguishing member 34 may expand when an arc occurs or the ambient temperature is higher than a predetermined temperature.

In one embodiment, the extinguishing member 34 may be a foam formed by foaming a material including a synthetic rubber.

In addition, in order to solve the above-described problem, the present invention provides a fuse-integrated busbar including a second busbar and an extinguishing member 34.

The second busbar may include an element 310, a first busbar unit 320 and a second busbar unit 330.

The element 310 may include a melting portion M that is melted and disconnected when overcurrent flows therethrough.

The first busbar unit 320 and the second busbar unit 330 may be integrated with the element 310.

The first busbar unit 320 and the second busbar unit 330 may extend in both directions from two lengthwise ends of the element 310.

The extinguishing member 34 may surround the element 310 and extinguish an arc.

The extinguishing member 34 may expand when an arc is generated or when the ambient temperature is higher than a predetermined temperature.

The extinguishing member 34 may include a foam formed by foaming a material including a synthetic rubber.

In one embodiment, the synthetic rubber may include silicone rubber.

In addition, in order to solve the above-described problem, the present invention provides a battery pack including one or more battery modules 10; one or more connectors 20; and one or more fuse-integrated busbars 30 of any one of claims 1 to 12.

Each of the one or more battery modules 10 may include one or more battery cells.

Each of the one or more connectors 20 may be electrically connectable to an external device.

At least a portion of the one or more fuse-integrated busbars 30 may be arranged between at least a portion of the one or more battery modules 10 and at least a portion of the one or more connectors 20 to electrically connect directly the at least a portion of the one or more battery modules 10 and the at least a portion of the one or more connectors 20, or may be arranged between two or more battery modules 10 to electrically connect directly the two or more battery modules 10 to each other.

In addition, in order to solve the above-described problem, the present invention provides a method of manufacturing the fuse-integrated busbar including an arranging process S510; a liquid injection process S520; and a curing process S530.

In the arranging process S510, the plurality of elements 310 or the element 310 may be arranged inside the mold.

In the liquid injection process S520, a foaming material including synthetic rubber may be injected into and foamed in the mold.

In the curing process S530, the foaming material may be cured.

### [ADVANTAGEOUS EFFECTS]

According to embodiments of the present invention, a fuse-integrated busbar may include a first busbar 32 and an extinguishing member 34. The first busbar 32 may include a plurality of busbar layers 300 stacked therein. Each of the plurality of busbar layers 300 may include an element 310, a first busbar unit 320 and a second busbar unit 330. The element 310 may include a melting portion M that is melted and disconnected when overcurrent flows therethrough. The first busbar unit 320 and the second busbar unit 330 may be integrated with the element 310. The first busbar unit 320 and the second busbar unit 330 may extend in both directions from two lengthwise ends of the element 310, respectively. The extinguishing member 34 may surround a plurality of the elements 310 of the plurality of busbar layers 300. The extinguishing member 34 may extinguish an arc.

Accordingly, since the first busbar 32 has a fuse function, it is not necessary to manufacture or purchase a fuse separately, and it is not necessary to install a fuse between two busbars as in the prior art. Therefore, the number and types of parts may be reduced, and the manufacturing cost may be reduced.

In addition, since the first and second busbar units 320 and 330 and the element 310 are integrated together, energy efficiency, quality and quality uniformity may be improved compared to the conventional case where a separate fuse is coupled between the busbars. In addition, the thicknesses, widths and shapes of the first and second busbar units 320 and 330 and the element 310 may be optimized such that resistance and heat generation are reduced when normal current flows therethrough and melting and disconnection is ensured when overcurrent flows therethrough.

In addition, since a plurality of busbar layers 300 are stacked to form the first busbar 32, the thickness of each busbar layer 300 may be reduced. Accordingly, since each busbar layer 300 may be easily deformed, the melting portion M may be protected even when force is applied to the fuse-integrated busbar 30. For example, since a compression force or tensile force (in, for example, lengthwise direction) applied to the busbar layer 300 due to temperature change or impact may be relieved by deformation (e.g., bending or straightening) of a portion (e.g., the first busbar or the second busbar) other than the melting portion M of the busbar layer 300, the melting portion M may be protected. Accordingly, the durability of the fuse-integrated busbar 30 as a fuse may be improved.

In addition, since the thickness of each busbar layer 300 is reduced, each busbar layer 300 may be easily deformed (e.g., bent) according to the shape or position of the counterpart. Here, each busbar layer 300 may be fastened to the counterpart after being deformed, or each busbar layer 300 may be deformed after being fastened to the counterpart. Accordingly, the fuse-integrated busbar 30 may be easily installed and maintained.

In addition, since the thickness of each busbar layer 300 is reduced, the melting portion M of each busbar layer 300 may reliably melt and be disconnected when overcurrent flows therethrough. Therefore, the fuse-integrated busbar 30 may reliably block overcurrent. In contrast, when the first busbar 32 is not constituted by multiple layers, thereby having a large thickness, the melting portion M may incompletely melt and be disconnected when overcurrent flows therethrough, thereby failing to block overcurrent.

According to embodiments of the present invention, the fuse-integrated busbar may further include a cover 36. The cover 36 may surround the plurality of elements 310 and the extinguishing member 34.

Accordingly, the extinguishing member 34 may be protected. In addition, since the state in which the extinguishing member 34 surrounds the plurality of elements 310 may be stably maintained by the cover 36, the extinguishing performance of the fuse-integrated busbar 30 may be improved.

According to embodiments of the present invention, each element 310 may include a hole H. The element 310 may be perforated by the hole H in the stacking direction. The hole H may define the melting portion M. The hole H of each element 310 may be in communication in the stacking direction with the hole H of a neighboring element 310 in the stacking direction. The cover 36 may include an insert part T. The insert part T may be inserted into a plurality of holes H of the plurality of elements 310. The extinguishing member 34 may be interposed between inner surfaces of the plurality of the holes H and the outer surface of the insert part T.

Accordingly, the extinguishing member 34 may be in contact with the inner surfaces of the plurality of holes H by the insert part T of the cover 36, and the contact may be stably maintained. Accordingly, the air (oxygen) inside the plurality of holes H, i.e., the air (oxygen) around the melting portion M, may be reduced or removed. Therefore, the improvement of the extinguishing performance of the extinguishing member 34 may be facilitated with a simple configuration and at low cost.

According to embodiments of the present invention, the first busbar unit 320, the second busbar unit 330 and the element 310 of each of the plurality of busbar layers 300 may be in contact with the first busbar unit 320, the second busbar unit 330 and the element 310 of a neighboring busbar layer 300 in the stacking direction, respectively. A plurality of melting portions M of the plurality of elements 310 may at least partially overlap with each other in lengthwise direction and in widthwise direction.

Accordingly, even when the melting portion M of some busbar layers 300 is disconnected due to temperature change, impact or thermal energy, the heat generation and temperature of the fuse-integrated busbar 30 may be similar to the case where the melting portion M is not disconnected when normal current flows therethrough. This is because the current that flowed through the disconnected melting portion M prior to the disconnection thereof may be distributed and flow through multiple melting portions M in the stacking direction very adjacent to the disconnected melting portion M. As a result, the energy efficiency, quality and durability of the fuse-integrated busbar 30 may be improved.

In addition, since the melting portion M may be supported or interfered with by the adjacent melting portion M in the stacking direction, the melting portion M is unlikely to be deformed. Accordingly, the durability of the fuse-integrated busbar 30 as a fuse may be improved.

In addition, the extinguishing member 34 may uniformly and stably wrap the plurality of melting portions M of the plurality of elements 310. Accordingly, the extinguishing performance of the fuse-integrated busbar 30 may be improved.

According to embodiments of the present invention, the melting portion M of each of the plurality of elements 310 may be in contact with the melting portion M of a neighboring element 310 in the stacking direction.

Accordingly, even when the melting portion M of some busbar layers 300 is disconnected due to temperature change, impact or thermal energy, the heat generation, temperature, etc. of the fuse-integrated busbar 30 when normal current flows therethrough may be similar to the case where the melting portion M is not disconnected. This is because the current that flowed through the disconnected melting portion M prior to the disconnection thereof may be distributed and flow through multiple melting portions M in contact with and immediately adjacent to in the stacking direction the disconnected melting portion M. Accordingly, the energy efficiency, quality and durability of the fuse-integrated busbar 30 may be improved.

In addition, since the melting portion M may be supported or interfered with by the melting portion M in contact therewith in the stacking direction, the melting portion M is unlikely to be deformed. Accordingly, the durability of the fuse-integrated busbar 30 as a fuse may be improved.

In addition, air (oxygen) may be reduced or removed between a pair of melting portions M that are adjacent in the stacking direction. Accordingly, the extinguishing performance of the fuse-integrated busbar 30 may be improved.

According to embodiments of the present invention, the melting portion M of each element 310 may include a first sub-melting portion MS1 and a second sub-melting portion MS2. The first sub-melting portion MS1 and the second sub-melting portion MS2 may be spaced apart from each other in the widthwise direction with the hole H interposed therebetween. The first sub-melting portion MS1 and the second sub-melting portion MS2 may be connected in parallel with each other.

Accordingly, even when one of the first sub-melting portion MS1 and the second sub-melting portion MS2 of the melting portion M of each busbar layer 300 is disconnected due to temperature change, impact or thermal energy, the normal current applied to each busbar layer 300 may flow through the other sub-melting portion. Accordingly, the energy efficiency, quality and durability of the fuse-integrated busbar 30 may be improved.

According to embodiments of the present invention, the first busbar unit 320, the second busbar unit 330 and the element 310 of each of the plurality of busbar layers 300 may be in contact with the first busbar unit 320, the second busbar unit 330 and the element 310 of a neighboring busbar layer 300 in the stacking direction, respectively. A plurality of the first sub-melting portions MS1 of the plurality of elements 310 may at least partially overlap with each other in lengthwise direction and in widthwise direction. The plurality of the second sub-melting portions MS2 of the plurality of elements 310 may at least partially overlap with each other in lengthwise direction and in widthwise direction.

Accordingly, even when one sub-melting portion of some of the busbar layers 300 is disconnected due to temperature change, impact or thermal energy, the heat generation, temperature, etc. of the fuse-integrated busbar 30 when normal current flows therethrough may be similar to the case where the sub-melting portion is not disconnected. This is because the current that flowed through the one disconnected sub-melting portion prior to the disconnection thereof may flow through the other adjacent sub-melting portion in widthwise direction or may be distributed and flow through multiple sub-melting portions adjacent in the stacking direction. Accordingly, the energy efficiency, quality and durability of the fuse-integrated busbar 30 may be improved.

In addition, since the sub-melting portion may be supported or interfered with by the sub-melting portion adjacent in the stacking direction, it is difficult for the sub-melting portion to be deformed. Accordingly, the durability of the fuse-integrated busbar 30 as a fuse may be improved.

In addition, the extinguishing member 34 may uniformly and stably wrap the plurality of first sub-melting portions MS1 and the plurality of second sub-melting portions MS2 of the plurality of elements 310. Accordingly, the extinguishing performance of the fuse-integrated busbar 30 may be improved.

According to embodiments of the present invention, a width or a thickness of the melting portion M may be less than a width or a thickness of portions adjacent to two lengthwise ends of the melting portion M, the portions located outside of the melting portion M. Each element 310 may include a plurality of the melting portions M. The plurality of melting portions M may be spaced apart from each other in lengthwise direction. The plurality of melting portions M may be connected in series with each other.

Accordingly, at least one melting portion M in lengthwise direction may be reliably melted. In particular, even when the total thicknesses of the melting portions M of the plurality of busbar layers 300 of the first busbar 32 is equal to the total of the thicknesses of the first busbar unit 320 or the second busbar unit 330 of the plurality of busbar layers 300, the melting portion M may be reliably melted when overcurrent flows therethrough. Accordingly, the fuse-integrated busbar 30 may reliably block overcurrent.

According to embodiments of the present invention, the extinguishing member 34 may expand when an arc occurs or the ambient temperature is higher than a predetermined temperature.

Accordingly, the spread of the arc, flame or heat may be easily prevented with a simple configuration and at low cost, and damage caused by the spread of the arc, flame or heat may be prevented.

In addition, since the external contact of the melting portion M is blocked by the expanded extinguishing member 34, short circuit, fire, safety accidents, etc. may be prevented.

In addition, since the extinguishing member 34 does not include an extinguishing sand used in a conventional fuse, the packaging or installation of the extinguishing member 34 is facilitated, and the extinguishing member 34 may have small size and lightweight.

According to embodiments of the present invention, the extinguishing member 34 may be a foam formed by foaming a material including a synthetic rubber.

Accordingly, since the extinguishing member 34 may be in contact with the element 310 by the foaming pressure when the synthetic rubber foam is formed, the air (oxygen) around the element 310 may be reduced or removed. Accordingly, manufacturing of the extinguishing member 34 with a simple configuration may be facilitated at low cost, and the extinguishing performance of the fuse-integrated busbar 30 may be improved.

In addition, since synthetic rubber generally has excellent elasticity and heat resistance, the extinguishing member 34 may stably expand while absorbing thermal energy. Accordingly, the spread of arc, flame or heat may be stably blocked with a simple configuration and at low cost.

In addition, since the synthetic rubber foam is used instead of the extinguishing sand of the conventional fuse, the packaging or installation of the extinguishing member 34 may be facilitated, and the extinguishing member 34 may have small size and lightweight.

In addition, in order to solve the above-described problem, a fuse-integrated busbar may include a second busbar and an extinguishing member 34. The second busbar may include an element 310 and a first busbar unit 320 and a second busbar unit 330. The element 310 may include a melting portion M that is melted and disconnected when overcurrent flows therethrough. The first busbar unit 320 and the second busbar unit 330 may be integrated with the element 310. The first busbar unit 320 and the second busbar unit 330 may extend in both directions from two lengthwise ends of the element 310. The extinguishing member 34 may surround the element 310 and extinguish an arc. The extinguishing member 34 may expand when an arc is generated or when the ambient temperature is higher than a predetermined temperature. The extinguishing member 34 may include a foam formed by foaming a material including a synthetic rubber.

Accordingly, since the second busbar has a fuse function, it is not necessary to manufacture or purchase a fuse separately, and it is not necessary to install a fuse between two busbars as in the prior art. Therefore, the number and types of parts may be reduced, and the manufacturing cost may be reduced.

In addition, since the first and second busbar units 320 and 330 and the element 310 are integrated together, energy efficiency, quality and quality uniformity may be improved compared to the conventional case where a separate fuse is coupled between the busbars. In addition, the thicknesses, widths and shapes of the first and second busbar units 320 and 330 and the element 310 may be optimized such that resistance and heat generation are reduced when normal current flows therethrough and melting and disconnection is ensured when overcurrent flows therethrough.

In addition, the spread of the arc, flame or heat may be easily prevented with a simple configuration and at low cost, and damage caused by the spread of the arc, flame or heat may be prevented.

In addition, since the external contact of the melting portion M is blocked by the expanded extinguishing member 34, short circuit, fire, safety accidents, etc. may be prevented.

In addition, since the extinguishing member 34 does not include an extinguishing sand used in a conventional fuse, the packaging or installation of the extinguishing member 34 is facilitated, and the extinguishing member 34 may have small size and lightweight.

In addition, since the extinguishing member 34 may be in contact with the element 310 by the foaming pressure when the synthetic rubber foam is formed, the air (oxygen) around the element 310 may be reduced or removed. Accordingly, manufacturing of the extinguishing member 34 with a simple configuration may be facilitated at low cost, and the extinguishing performance of the fuse-integrated busbar 30 may be improved.

In addition, since synthetic rubber generally has excellent elasticity and heat resistance, the extinguishing member 34 may stably expand while absorbing thermal energy. Accordingly, the spread of arc, flame or heat may be stably blocked with a simple configuration and at low cost.

In addition, since the synthetic rubber foam is used instead of the extinguishing sand of the conventional fuse, the packaging or installation of the extinguishing member 34 may be facilitated, and the extinguishing member 34 may have small size and lightweight.

According to embodiments of the present invention, the synthetic rubber may include silicone rubber.

Accordingly, silicone rubber foam may stably expand while absorbing thermal energy. This is because silicone rubber foam generally has excellent elasticity and heat resistance. Accordingly, the spread of arc, flame or heat may be stably blocked with a simple configuration and at low cost.

According to embodiments of the present invention, a battery pack may include: one or more battery modules 10; one or more connectors 20; and one or more fuse-integrated busbars 30 of any one of claims 1 to 12. Each of the one or more battery modules 10 may include one or more battery cells. Each of the one or more connectors 20 may be electrically connectable to an external device. At least a portion of the one or more fuse-integrated busbars 30 may be arranged between at least a portion of the one or more battery modules 10 and at least a portion of the one or more connectors 20 to electrically connect directly the at least a portion of the one or more battery modules 10 and the at least a portion of the one or more connectors 20, or may be arranged between two or more battery modules 10 to electrically connect directly the two or more battery modules 10 to each other.

Accordingly, a short circuit may be easily prevented at the battery module level with a simple configuration and at low cost. Accordingly, the safety of the battery pack 1 may be improved.

According to embodiments of the present invention, a method of manufacturing the fuse-integrated busbar may include: an arranging process S510; a liquid injection process S520; and a curing process S530 of curing the foaming material. In the arranging process S510, the plurality of elements 310 or the element 310 may be arranged inside a mold. In the liquid injection process S520 a foaming material including synthetic rubber may be injected and foamed in the mold. In the curing process S530, the foaming material may be cured.

Accordingly, the manufacturing of the extinguishing member 34 of the fuse-integrated busbar 30 with a simple configuration may be facilitated at low cost. In addition, the extinguishing performance of the fuse-integrated busbar 30 may be improved. This is because the extinguishing member 34 may be in contact with the element 310 by the foaming pressure when the synthetic rubber foam is formed such that the air (oxygen) around the element 310 is reduced or removed.

In addition to the advantageous effects described above, specific effects of the present invention will be described further while describing specific details of the present invention.

### [BRIEF DESCRIPTION OF DRAWINGS]

FIG. 1 is a perspective view schematically illustrating a battery pack according to an embodiment of the present invention.
FIGS. 2 to 5 are perspective views and exploded perspective views illustrating a fuse-integrated busbar of the battery pack of FIG. 1.
FIG. 6 is a perspective view illustrating a first busbar of the fuse-integrated busbar of FIGS. 2 to 5.
FIGS. 7 and 8 are perspective view and partial plan view illustrating the busbar layer of the first busbar of FIG. 6, respectively.
FIG. 9 is a flow chart illustrating a method of manufacturing a fuse-integrated busbar according to an embodiment of the present invention.

### [DESCRIPTION OF REFERENCE NUMERALS]

| | | | |
|---|---|---|---|
| 1: | battery pack | 10: | battery module |
| 20: | connector | 30: | fuse-integrated busbar |
| 32: | first busbar | 300: | busbar layer |
| 310: | element | M: | hole |
| M1: | first hole | M2: | second hole |
| M3: | third hole | MS1: | first sub-hole |
| MS2: | second sub-hole | G: | groove |
| 320: | first busbar | 330: | second busbar |
| 34: | extinguishing member | | |
| H': | hole | G': | groove |
| 36: | cover | | |
| T: | insert part | P: | projection |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

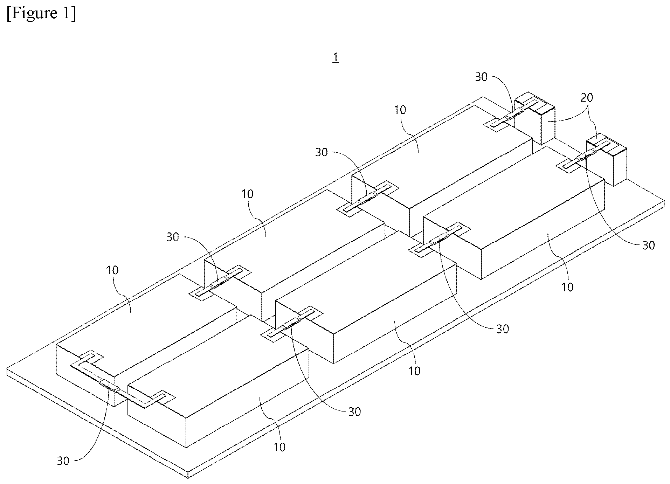

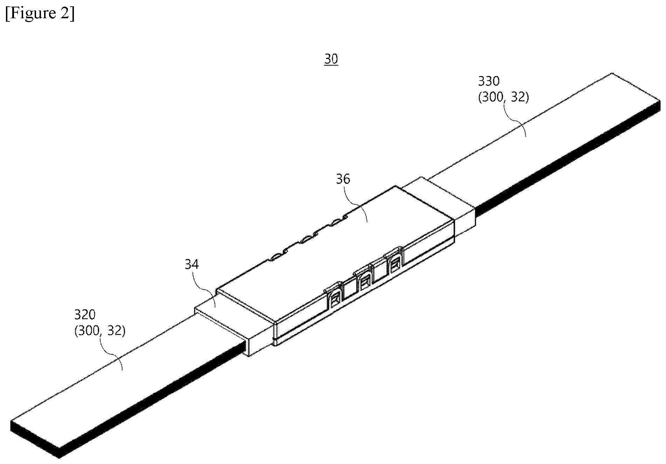

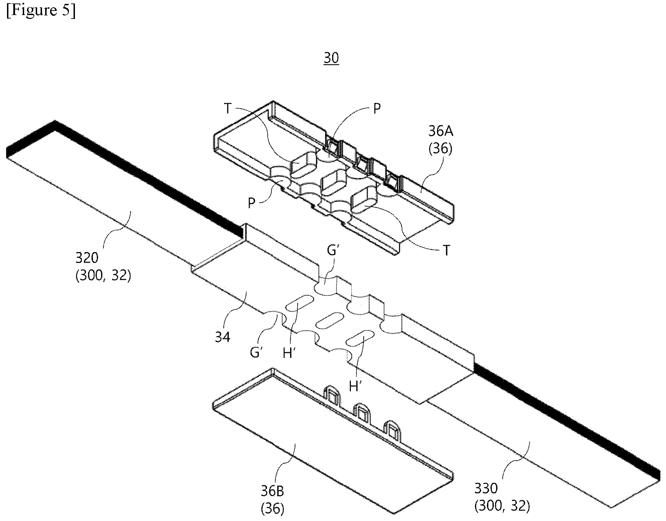

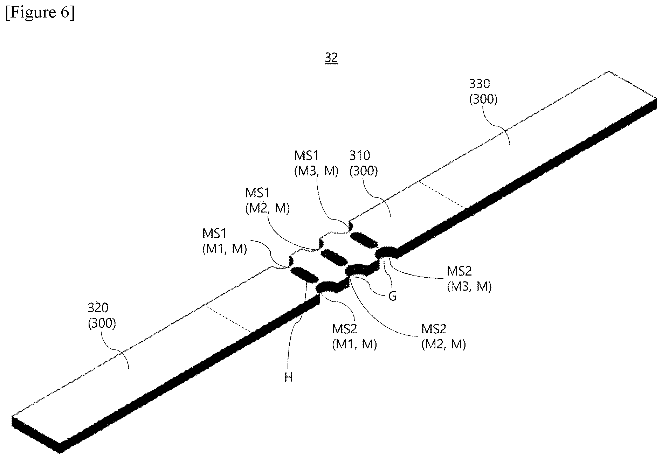

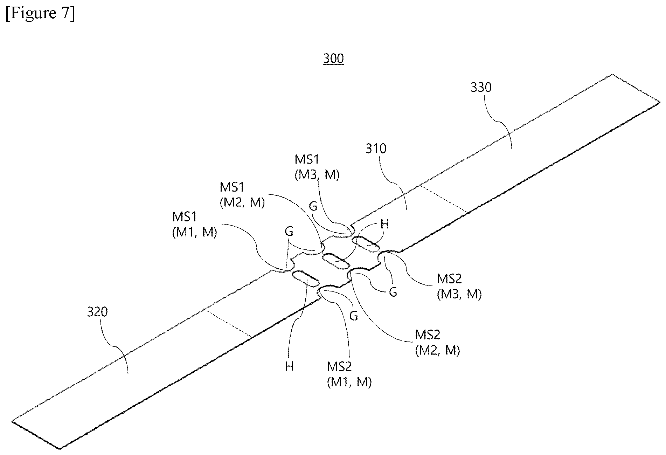

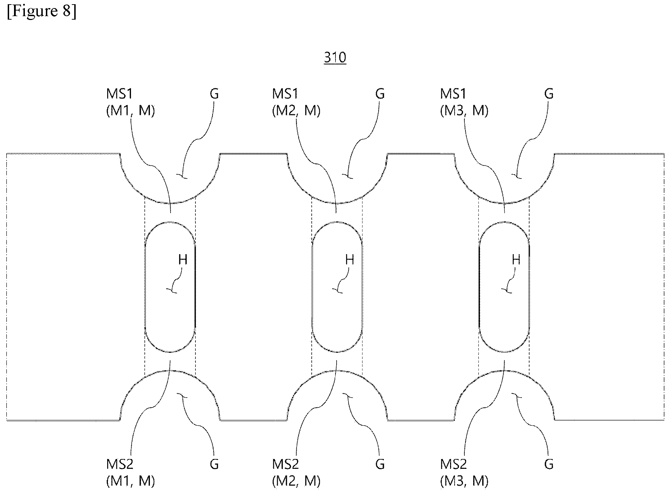

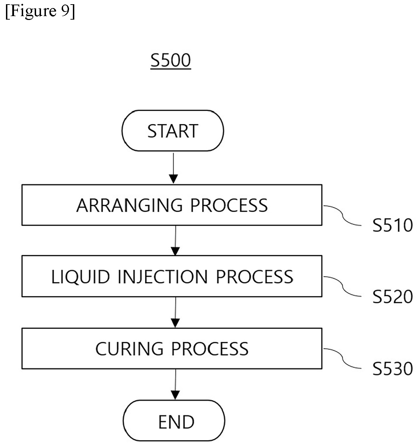

FIG. 1 is a perspective view schematically illustrating a battery pack according to an embodiment of the present invention. FIGS. 2 to 5 are perspective views and exploded perspective views illustrating a fuse-integrated busbar of the battery pack of FIG. 1. FIG. 6 is a perspective view illustrating a first busbar of the fuse-integrated busbar of FIGS. 2 to 5. FIGS. 7 and 8 are perspective view and partial plan view illustrating the busbar layer of the first busbar of FIG. 6, respectively. FIG. 9 is a flow chart illustrating a method of manufacturing a fuse-integrated busbar according to an embodiment of the present invention.

### [BATTERY PACK]

Referring to FIG. 1, the battery pack 1 may include: one or more battery modules 10; one or more connectors 20; and one or more fuse-integrated busbars 30.

Each of the one or more battery modules 10 may include one or more battery cells.

Each of the one or more connectors 20 may be electrically connectable to an external device. Here, the external device may be a power supply device (e.g., a charger) or a power consuming device (e.g., a motor).

At least a portion of the one or more fuse-integrated busbars 30 may be arranged between at least a portion of the one or more battery modules 10 and at least a portion of the one or more connectors 20. Accordingly, the at least a portion of the one or more fuse-integrated busbars 30 may electrically connect directly the at least a portion of the one or more battery modules 10 and the at least a portion of the one or more connectors 20.

At least a portion of the one or more fuse-integrated busbars 30 may be arranged between two or more battery modules 10. Accordingly, the at least a portion of the fuse-integrated busbars 30 may electrically connect directly the two or more battery modules 10 to each other.

Accordingly, a short circuit may be easily prevented at the battery module level with a simple configuration and at low cost. Accordingly, the safety of the battery pack 1 may be improved.

Hereinafter, the fuse-integrated busbar 30 will be described.

### [FIRST EMBODIMENT OF FUSE-INTEGRATED BUSBAR]

Referring to FIGS. 2 to 5, the fuse-integrated busbar 30 according to the first embodiment may include a first busbar 32 and an extinguishing member 34. The fuse-integrated busbar 30 according to the first embodiment may further include a cover 36.

### [FIRST BUSBAR]

Further referring to FIGS. 6 to 8, the first busbar 32 may include a plurality of busbar layers 300 stacked therein.

The thickness of the busbar layer 300 may be 1/10 or less of the width of the busbar layer 300. The thickness of the busbar layer 300 may be 1 mm or less. The thickness of the busbar layer 300 may be 0.2 mm.

Each busbar layer 300 may include an element 310, a first busbar unit 320 and a second busbar unit 330. The first busbar unit 320, the second busbar unit 330 and the element 310 of each busbar layer 300 may be in contact with the first busbar unit 320, the second busbar unit 330 and the element 310 of a neighboring busbar layer 300 in the stacking direction, respectively. Here, the stacking direction may be thicknesswise direction. In each busbar layer 300, the thicknesses of the first busbar unit 320, the second busbar unit 330 and the element 310 may be the same.

### [ELEMENT]

The element 310 of each busbar layer 300 may include a melting portion M that is melted and disconnected when overcurrent flows therethrough.

Each element 310 may include a hole H. Here, each element 310 may refer to an element 310 of each busbar layer 300. The same applies hereinafter.

The element 310 may be perforated by the hole H in the stacking direction. The hole H may define the melting portion M. The hole H of each element 310 may be in communication in the stacking direction with the hole H of a neighboring element 310 in the stacking direction (FIG. 6).

Each element 310 may include a groove G. The groove G may be formed inwardly from the widthwise end of the element 310 and have two open sides in the stacking direction. The groove G may define a melting portion M. The groove G of each element 310 may be connected to the groove G of the neighboring element 310 in the stacking direction (FIG. 6).

The plurality of melting portions M of the plurality of elements 310 may at least partially overlap with each other in lengthwise direction and in widthwise direction (FIG. 6). As described above, the first busbar unit 320, the second busbar unit 330 and the element 310 of each busbar layer 300 may be in contact with the first busbar unit 320, the second busbar unit 330 and the element 310 of a neighboring busbar layer 300 in the stacking direction, respectively.

Accordingly, even when the melting portion M of some busbar layers 300 is disconnected due to temperature change, impact or thermal energy, the heat generation and temperature of the fuse-integrated busbar 30 may be similar to the case where the melting portion M is not disconnected when normal current flows therethrough. This is because the current that flowed through the disconnected melting portion M prior to the disconnection thereof may be distributed and flow through multiple melting portions M in the stacking direction very adjacent to the disconnected melting portion M. As a result, the energy efficiency, quality and durability of the fuse-integrated busbar 30 may be improved.

In addition, since the melting portion M may be supported or interfered with by the adjacent melting portion M in the stacking direction, the melting portion M is unlikely to be deformed. Accordingly, the durability of the fuse-integrated busbar 30 as a fuse may be improved.

In addition, the extinguishing member 34 may uniformly and stably wrap the plurality of melting portions M of the plurality of elements 310. Accordingly, the extinguishing performance of the fuse-integrated busbar 30 may be improved.

In each busbar layer 300, the thickness of the melting portion M may be the same as those of the first busbar unit 320, the second busbar unit 330 and the element 310.

The melting portion M of each element 310 may be in contact with the melting portion M of a neighboring element 310 in the stacking direction.

Accordingly, even when the melting portion M of some busbar layers 300 is disconnected due to temperature change, impact or thermal energy, the heat generation, temperature, etc. of the fuse-integrated busbar 30 when normal current flows therethrough may be similar to the case where the melting portion M is not disconnected. This is because the current that flowed through the disconnected melting portion M prior to the disconnection thereof may be distributed and flow through multiple melting portions M in contact with and immediately adjacent to in the stacking direction the disconnected melting portion M. Accordingly, the energy efficiency, quality and durability of the fuse-integrated busbar 30 may be improved.

In addition, since the melting portion M may be supported or interfered with by the melting portion M in contact therewith in the stacking direction, the melting portion M is unlikely to be deformed. Accordingly, the durability of the fuse-integrated busbar 30 as a fuse may be improved.

In addition, air (oxygen) may be reduced or removed between a pair of melting portions M that are adjacent in the stacking direction. Accordingly, the extinguishing performance of the fuse-integrated busbar 30 may be improved.

The melting portion M of each element 310 may include a first sub-melting portion MS1 and a second sub-melting portion MS2.

The first sub-melting portion MS1 and the second sub-melting portion MS2 may be spaced apart from each other in the widthwise direction with the hole H interposed therebetween. The first sub-melting portion MS1 and the second sub-melting portion MS2 may be connected in parallel with each other.

Accordingly, even when one of the first sub-melting portion MS1 and the second sub-melting portion MS2 of the melting portion M of each busbar layer 300 is disconnected due to temperature change, impact or thermal energy, the normal current applied to each busbar layer 300 may flow through the other sub-melting portion. Accordingly, the energy efficiency, quality and durability of the fuse-integrated busbar 30 may be improved.

A plurality of the first sub-melting portions MS1 of the plurality of elements 310 may at least partially overlap with each other in lengthwise direction and in widthwise direction. The plurality of the second sub-melting portions MS2 of the plurality of elements 310 may at least partially overlap with each other in lengthwise direction and in widthwise direction. As described above, the first busbar unit 320, the second busbar unit 330 and the element 310 of each busbar layer 300 may be in contact with the first busbar unit 320, the second busbar unit 330 and the element 310 of a neighboring busbar layer 300 in the stacking direction, respectively.

Accordingly, even when one sub-melting portion of some of the busbar layers 300 is disconnected due to temperature change, impact or thermal energy, the heat generation, temperature, etc. of the fuse-integrated busbar 30 when normal current flows therethrough may be similar to the case where the sub-melting portion is not disconnected. This is because the current that flowed through the one disconnected sub-melting portion prior to the disconnection thereof may flow through the other adjacent sub-melting portion in widthwise direction or may be distributed and flow through multiple sub-melting portions adjacent in the stacking direction. Accordingly, the energy efficiency, quality and durability of the fuse-integrated busbar 30 may be improved.

In addition, since the sub-melting portion may be supported or interfered with by the sub-melting portion adjacent in the stacking direction, it is difficult for the sub-melting portion to be deformed. Accordingly, the durability of the fuse-integrated busbar 30 as a fuse may be improved.

In addition, the extinguishing member 34 may uniformly and stably wrap the plurality of first sub-melting portions MS1 and the plurality of second sub-melting portions MS2 of the plurality of elements 310. Accordingly, the extinguishing performance of the fuse-integrated busbar 30 may be improved.

A width or a thickness of the melting portion M may be less than a width or a thickness of portions adjacent to two lengthwise ends of the melting portion M, the portions located outside of the melting portion M. Each element 310 may include a plurality of the melting portions M spaced apart from each other in lengthwise direction. For example, the melting portions M may include first, second and third melting portions M1, M2 and M3 spaced apart from one another in lengthwise direction and connected in series with each other.

Accordingly, at least one melting portion M in lengthwise direction may be reliably melted. In particular, even when the total thicknesses of the melting portions M of the plurality of busbar layers 300 of the first busbar 32 is equal to the total of the thicknesses of the first busbar unit 320 or the second busbar unit 330 of the plurality of busbar layers 300, the melting portion M may be reliably melted when overcurrent flows therethrough. Accordingly, the fuse-integrated busbar 30 may reliably block overcurrent.

Each of the first, second and third melting portions M1, M2 and M3 may include the first sub-melting portion MS1 and the second sub-melting portion MS2 described above, respectively.

### [FIRST BUSBAR AND SECOND BUSBAR]

The first busbar unit 320 and the second busbar unit 330 may be integrated with the element 310. The first busbar unit 320 and the second busbar unit 330 may extend in both directions from two lengthwise ends of the element 310, respectively.

As described above, the fuse-integrated busbar 30 may include: the first busbar 32 wherein the busbar layer 300 with the element 310, the first busbar unit 320 and the second busbar unit 330 are integrated together are stacked; and the extinguishing member 34 described below.

Accordingly, since the first busbar 32 has a fuse function, it is not necessary to manufacture or purchase a fuse separately, and it is not necessary to install a fuse between two busbars as in the prior art. Therefore, the number and types of parts may be reduced, and the manufacturing cost may be reduced.

In addition, since the first and second busbar units 320 and 330 and the element 310 are integrated together, energy efficiency, quality and quality uniformity may be improved compared to the conventional case where a separate fuse is coupled between the busbars. In addition, the thicknesses, widths and shapes of the first and second busbar units 320 and 330 and the element 310 may be optimized such that resistance and heat generation are reduced when normal current flows therethrough and melting and disconnection is ensured when overcurrent flows therethrough.

In addition, since a plurality of busbar layers 300 are stacked to form the first busbar 32, the thickness of each busbar layer 300 may be reduced. Accordingly, since each busbar layer 300 may be easily deformed, the melting portion M may be protected even when force is applied to the fuse-integrated busbar 30. For example, since a compression force or tensile force (in, for example, lengthwise direction) applied to the busbar layer 300 due to temperature change or impact may be relieved by deformation (e.g., bending or straightening) of a portion (e.g., the first busbar or the second busbar) other than the melting portion M of the busbar layer 300, the melting portion M may be protected. Accordingly, the durability of the fuse-integrated busbar 30 as a fuse may be improved.

In addition, since the thickness of each busbar layer 300 is reduced, each busbar layer 300 may be easily deformed (e.g., bent) according to the shape or position of the counterpart. Here, each busbar layer 300 may be fastened to the counterpart after being deformed, or each busbar layer 300 may be deformed after being fastened to the counterpart. Accordingly, the fuse-integrated busbar 30 may be easily installed and maintained.

In addition, since the thickness of each busbar layer 300 is reduced, the melting portion M of each busbar layer 300 may reliably melt and be disconnected when overcurrent flows therethrough. Therefore, the fuse-integrated busbar 30 may reliably block overcurrent. In contrast, when the first busbar 32 is not constituted by multiple layers, thereby having a large thickness, the melting portion M may incompletely melt and be disconnected when overcurrent flows therethrough, thereby failing to block overcurrent.

Of the two lengthwise ends of one first busbar unit 320, the first lengthwise end opposite to the second lengthwise end adjacent to the element 310 may be bonded (e.g., welded) to a neighboring first busbar unit 320 in the stacking direction. The same also applies to the second busbar unit 330.

The first busbar unit 320 and/or the second busbar unit 330 may be wrapped with an insulating tube (such as TPV).

### [EXTINGUISHING MEMBER]

The extinguishing member 34 may surround a plurality of the elements 310 of the plurality of busbar layers 300. The extinguishing member 34 may extinguish an arc.

The extinguishing member 34 may expand when an arc occurs or the ambient temperature is higher than a predetermined temperature. For example, when an arc is generated in the melting portion M, the extinguishing member 34 may absorb thermal energy and expand. The expansion ratio of the extinguishing member 34 may be controlled by controlling the composition or composition ratio of the extinguishing member 34.

Accordingly, the spread of the arc, flame or heat may be easily prevented with a simple configuration and at low cost, and damage caused by the spread of the arc, flame or heat may be prevented.

In addition, since the external contact of the melting portion M is blocked by the expanded extinguishing member 34, short circuit, fire, safety accidents, etc. may be prevented.

In addition, since the extinguishing member 34 does not include an extinguishing sand used in a conventional fuse, the packaging or installation of the extinguishing member 34 is facilitated, and the extinguishing member 34 may have small size and lightweight.

The extinguishing member 34 may be a foam formed by foaming a material including a synthetic rubber.

Accordingly, since the extinguishing member 34 may be in contact with the element 310 by the foaming pressure when the synthetic rubber foam is formed, the air (oxygen) around the element 310 may be reduced or removed. Accordingly, manufacturing of the extinguishing member 34 with a simple configuration may be facilitated at low cost, and the extinguishing performance of the fuse-integrated busbar 30 may be improved.

In addition, since synthetic rubber generally has excellent elasticity and heat resistance, the extinguishing member 34 may stably expand while absorbing thermal energy. Accordingly, the spread of arc, flame or heat may be stably blocked with a simple configuration and at low cost.

In addition, since the synthetic rubber foam is used instead of the extinguishing sand of the conventional fuse, the packaging or installation of the extinguishing member 34 may be facilitated, and the extinguishing member 34 may have small size and lightweight.

The synthetic rubber may include silicone rubber.

Accordingly, silicone rubber foam may stably expand while absorbing thermal energy. This is because silicone rubber foam generally has excellent elasticity and heat resistance. Accordingly, the spread of arc, flame or heat may be stably blocked with a simple configuration and at low cost.

Here, the foam formed by foaming the synthetic rubber including silicone rubber may refer to a known silicone foam.

The extinguishing member 34 may include a hole H' and/or a groove G' corresponding to the hole H and/or the groove G of the element 310. The inner surfaces of the hole H' and/or the groove G' of the extinguishing member 34 may surround the inner surface of the hole H and/or the groove G of the element 310.

### [COVER]

The cover 36 may surround the plurality of elements 310 and the extinguishing member 34.

Accordingly, the extinguishing member 34 may be protected. In addition, since the state in which the extinguishing member 34 surrounds the plurality of elements 310 may be stably maintained by the cover 36, the extinguishing performance of the fuse-integrated busbar 30 may be improved.

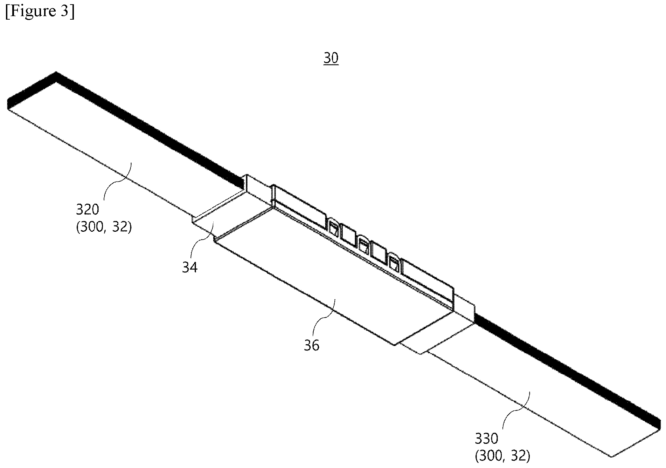

The cover 36 may include an insert part T. The insert part T may be inserted into a plurality of holes H of the plurality of elements 310 (FIGS. 3 and 6). The insert part T may be inserted into the hole H' of the extinguishing member 34 (FIG.S 3 and 6).

An extinguishing member 34 may be interposed between inner surfaces of a plurality of holes H and the outer surface of the insert part T (FIGS. 3 and 6).

Accordingly, the extinguishing member 34 may be in contact with the inner surfaces of the plurality of holes H by the insert part T of the cover 36, and the contact may be stably maintained. Accordingly, the air (oxygen) inside the plurality of holes H, i.e., the air (oxygen) around the melting portion M, may be reduced or removed. Therefore, the improvement of the extinguishing performance of the extinguishing member 34 may be facilitated with a simple configuration and at low cost.

The cover 36 may include a projection P. The projection P may be inserted into a plurality of grooves G of a plurality of elements 310 (FIGS. 3 and 6). The projection P may be inserted into the groove G' of the extinguishing member 34 (FIGS. 3 and 6).

The extinguishing member 34 may be interposed between the inner surfaces of the plurality of grooves G and the outer surface of the projection P (FIGS. 3 and 6).

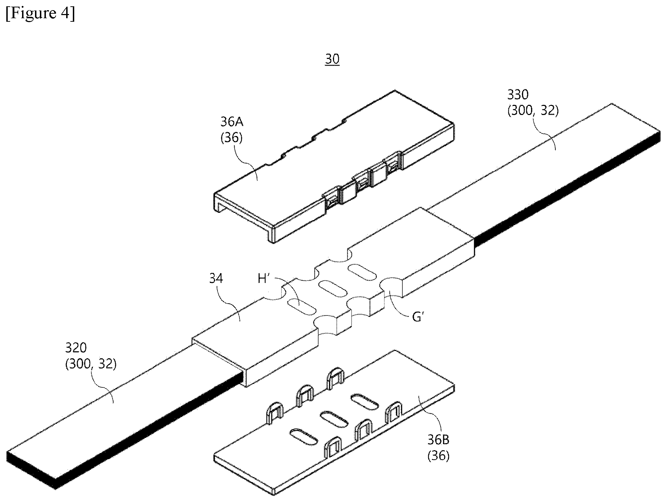

The cover 36 may be installed by fastening the first cover 36A and the second cover 36B in the stacking direction with the plurality of elements 310 and the extinguishing member 34 interposed therebetween (FIG. 4).

### [SECOND EMBODIMENT OF FUSE-INTEGRATED BUSBAR]

The fuse-integrated busbar according to the second embodiment may include a second busbar and an extinguishing member 34. The fuse-integrated busbar according to the second embodiment may further include a cover 36.

The second busbar may include an element 310, a first busbar unit 320 and a second busbar unit 330. That is, unlike the first busbar 32 described above, the second busbar may be formed not by stacking multiple busbar layers 300. For example, the second busbar may be formed by a single busbar layer 300.

The element 310 may include a melting portion M that is melted and disconnected when overcurrent flows therethrough.

The first busbar unit 320 and the second busbar unit 330 may be integrated with the element 310. The first busbar unit 320 and the second busbar unit 330 may extend in both directions from two lengthwise ends of the element 310.

The extinguishing member 34 may surround the elements 310. The extinguishing member 34 may extinguish an arc. The extinguishing member 34 may expand when an arc occurs or the ambient temperature is higher than a predetermined temperature.

Accordingly, since the second busbar has a fuse function, it is not necessary to manufacture or purchase a fuse separately, and it is not necessary to install a fuse between two busbars as in the prior art. Therefore, the number and types of parts may be reduced, and the manufacturing cost may be reduced.

In addition, since the first and second busbar units 320 and 330 and the element 310 are integrated together, energy efficiency, quality and quality uniformity may be improved compared to the conventional case where a separate fuse is coupled between the busbars. In addition, the thicknesses, widths and shapes of the first and second busbar units 320 and 330 and the element 310 may be optimized such that resistance and heat generation are reduced when normal current flows therethrough and melting and disconnection is ensured when overcurrent flows therethrough.

In addition, the spread of the arc, flame or heat may be easily prevented with a simple configuration and at low cost, and damage caused by the spread of the arc, flame or heat may be prevented.

In addition, since the external contact of the melting portion M is blocked by the expanded extinguishing member 34, short circuit, fire, safety accidents, etc. may be prevented.

In addition, since the extinguishing member 34 does not include an extinguishing sand used in a conventional fuse, the packaging or installation of the extinguishing member 34 is facilitated, and the extinguishing member 34 may have small size and lightweight.

The extinguishing member 34 may be a foam formed by foaming a material including a synthetic rubber.

Matters not described in relation to the fuse-integrated busbar according to the second embodiment may be inferred from the fuse-integrated busbar 30 according to the first embodiment described above.

### [METHOD OF MANUFACTURING FUSE-INTEGRATED BUSBAR]

Referring to FIG. 9, a method of manufacturing the fuse-integrated busbar S500 may include an arranging process S510, a liquid injection process S520, and a curing process S530.

In the arranging process S510, the plurality of elements 310 of the first busbar or the element 310 of the second busbar of the fuse-integrated busbar according to the first or second embodiment described above may be arranged inside a mold.

In the liquid injection process S520, a foaming material including synthetic rubber may be injected into and foamed in the mold. For example, the foaming material may include a synthetic rubber (e.g., silicone rubber) composition and a foaming agent. The foaming material may further include a curing agent. The foaming material may include a mixture of the synthetic rubber composition and the material including the foaming agent. The foaming material may include a mixture of the synthetic rubber composition, the foaming agent and the curing agent.

In the curing process S530, the foaming material may be cured.

Accordingly, the manufacturing of the extinguishing member 34 of the fuse-integrated busbar 30 with a simple configuration may be facilitated at low cost. In addition, the extinguishing performance of the fuse-integrated busbar 30 may be improved. This is because the extinguishing member 34 may be in contact with the element 310 by the foaming pressure when the synthetic rubber foam is formed such that the air (oxygen) around the element 310 is reduced or removed.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A fuse-integrated busbar, comprising:
a first busbar 32 comprising a plurality of busbar layers 300 stacked therein, each of the plurality of busbar layers 300 comprising: an element 310 provided with a melting portion M melting and disconnecting when an overcurrent flows therethrough; and a first busbar unit 320 and a second busbar unit 330 integrated with the element 310 and extending from two lengthwise ends of the element 310, respectively; and
an extinguishing member 34 surrounding a plurality of the elements 310 of the plurality of busbar layers 300 to extinguish an arc.

2. The fuse-integrated busbar of claim 1, further comprising a cover 36 surrounding the plurality of the elements 310 and the extinguishing member 34.

3. The fuse-integrated busbar of claim 2, wherein each of the plurality of the elements 310 comprises a hole H perforating therethrough in a stacking direction of the plurality of busbar layers 300 and defining the melting portion M,
the hole H of each of the plurality of the elements 310 is in communication in the stacking direction with the hole H of a neighboring element 310 in the stacking direction,
the cover 36 comprises an insert part T inserted in a plurality of the holes H of the plurality of the elements 310, and
the extinguishing member 34 is interposed between inner surfaces of the plurality of the holes H and an outer surface of the insert part T.

4. The fuse-integrated busbar of any one of claims 1 to 3, wherein the first busbar unit 320, the second busbar unit 330 and the element 310 of each of the plurality of busbar layers 300 are in contact with the first busbar unit 320, the second busbar unit 330 and the element 310 of a neighboring busbar layer 300 in a stacking direction of the plurality of busbar layers 300, respectively, and
a plurality of the melting portions M of the plurality of the elements 310 at least partially overlap with each other in lengthwise direction and in widthwise direction.

5. The fuse-integrated busbar of claim 4, wherein the melting portion M of each of the plurality of the elements 310 is in contact with the melting portion M of a neighboring element 310 in the stacking direction.

6. The fuse-integrated busbar of one of claims 1 and 2, wherein the melting portion M of the element 310 comprises a first sub-melting portion MS1 and a second sub-melting portion MS2 connected in parallel and spaced apart in widthwise direction with a hole H interposed therebetween.

7. The fuse-integrated busbar of claim 6, wherein the first busbar unit 320, the second busbar unit 330 and the element 310 of each of the plurality of busbar layers 300 are in contact with the first busbar unit 320, the second busbar unit 330 and the element 310 of a neighboring busbar layer 300 in a stacking direction of the plurality of busbar layers 300, respectively,
a plurality of the first sub-melting portions MS1 of the plurality of the elements 310 at least partially overlap with each other in lengthwise direction and in widthwise direction, and
a plurality of the second sub-melting portions MS2 of the plurality of the elements 310 at least partially overlap with each other in lengthwise direction and in widthwise direction.

8. The fuse-integrated busbar of any one of claims 1 to 7, wherein a width or a thickness of the melting portion M is less than a width or a thickness of portions adjacent to two lengthwise ends of the melting portion M, the portions located outside of the melting portion M, and
each of the plurality of the elements 310 comprises a plurality of the melting portions M connected in series and spaced apart from each other in lengthwise direction.

9. The fuse-integrated busbar of any one of claims 1 to 8, wherein the extinguishing member 34 expands when an arc is generated or when an ambient temperature is higher than a predetermined temperature.

10. The fuse-integrated busbar of claim 9, wherein the extinguishing member 34 is a foam formed by foaming a material comprising synthetic rubber.

11. A fuse-integrated busbar, comprising:
a second busbar comprising: an element 310 provided with a melting portion M melting and disconnecting when an overcurrent flows therethrough; and a first busbar unit 320 and a second busbar unit 330 integrated with the element 310 and extending from two lengthwise ends of the element 310, respectively; and
an extinguishing member 34 surrounding the element 310 to extinguish an arc,
wherein the extinguishing member 34 comprises a foam formed by foaming a material comprising synthetic rubber and expanding when the arc is generated or when an ambient temperature is higher than a predetermined temperature.

12. The fuse-integrated busbar of any one of claims 10 and 11, wherein the synthetic rubber comprises silicone rubber.

13. A battery pack, comprising:
one or more battery modules 10, each of the one or more battery modules 10 comprising one or more battery cells;
one or more connectors 20, each of the one or more connectors electrically connectable to an external device; and
one or more fuse-integrated busbars 30 of any one of claims 1 to 12,
wherein at least a portion of the one or more fuse-integrated busbars 30 is arranged between at least a portion of the one or more battery modules 10 and at least a portion of the one or more connectors 20 to electrically connect directly the at least a portion of the one or more battery modules 10 and the at least a portion of the one or more connectors 20, or is arranged between two or more battery modules 10 to electrically connect directly the two or more battery modules 10 to each other.

14. A method of manufacturing the fuse-integrated busbar of any one of claims 1 to 12, comprising:
an arranging process S510 of arranging the plurality of the elements 310 or the element 310 inside a mold;
a liquid injection process S520 of injecting and foaming a foaming material comprising synthetic rubber in the mold; and
a curing process S530 of curing the foaming material.
